(19) **Europäisches Patentamt**
**European Patent Office**
**Office européen des brevets**

(11) **EP 2 030 299 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(51) Int Cl.:
*H02J 3/38* (2006.01)  *H02M 7/48* (2007.01)

(21) Anmeldenummer: **08757932.2**

(22) Anmeldetag: **12.04.2008**

(86) Internationale Anmeldenummer:
**PCT/DE2008/000621**

(87) Internationale Veröffentlichungsnummer:
**WO 2009/003432 (08.01.2009 Gazette 2009/02)**

(54) **WECHSELRICHTER ZUR EINSPEISUNG ELEKTRISCHER ENERGIE IN EIN ENERGIEVERSORGUNGSNETZ**

INVERTER FOR FEEDING ELECTRICAL ENERGY INTO A POWER SUPPLY SYSTEM

ONDULEUR DESTINÉ À INJECTER DE L'ÉNERGIE ÉLECTRIQUE DANS UN RÉSEAU DE DISTRIBUTION D'ÉNERGIE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.06.2007 DE 102007030577**

(43) Veröffentlichungstag der Anmeldung:
**04.03.2009 Patentblatt 2009/10**

(73) Patentinhaber: **SMA Solar Technology AG 34266 Niestetal (DE)**

(72) Erfinder:
• ZACHARIAS, Peter
  **34131 Kassel (DE)**
• SAHAN, Benjamin
  **34121 Kassel (DE)**

(74) Vertreter: **Walther, Walther & Hinz GbR Heimradstrasse 2 34130 Kassel (DE)**

(56) Entgegenhaltungen:
WO-A-2006/005562    DE-A1- 10 221 592
DE-C1- 19 732 218

## Beschreibung

Die Erfindung betrifft einen Wechselrichter der im Oberbegriff des Anspruchs 1 angegebenen Gattung.

Zur Einspeisung elektrischer Energie, die mit Gleichspannungsgeneratoren wie z. B. Photovoltaik- oder Brennstoffzellenanlagen erzeugt wird, in ein Wechselstromnetz, insbesondere das öffentliche Energieversorgungsnetz (50/60 Hz), werden Wechselrichter der verschiedensten Art verwendet Zwischen dem Gleichspannungsgenerator und dem eigentlichen Wechselrichter (DC/AC-Wandler) ist in den meisten Fällen noch ein Gleichspannungswandler (DC-DC-Steller) vorgesehen, der dem Zweck dient, die vom Gleichspannungsgenerator gelieferte Gleichspannung in eine vom Wechselrichter benötigte bzw. an diesen angepasste Gleichspannung umzuwandeln.

Aus verschiedenen Gründen ist es erwünscht, einen der Ausgänge des Gleichspannungsgenerators zu erden, wobei im Rahmen der vorliegenden Erfindung insbesondere solche Fälle betrachtet werden, bei denen der Erdanschluss am negativen Ausgang des Gleichspannungsgenerators vorgesehen wird. Der Grund für die gewünschte Erdung besteht einerseits darin, dass es Länder gibt, in denen eine solche Erdung vorgeschrieben ist. Andererseits ergeben sich bei fehlender Erdung verschiedene Nachteile beim Betrieb. Hierzu zählt u. a. das Problem der hochfrequenten Ableitströme. Aufgrund von unvermeidbaren parasitären Kapazitäten zwischen dem Gleichspannungsgenerator und Erde kann es bei Potentialschwankungen zu nicht unerheblichen Ausgleichsströmen kommen, die ein nicht tolerierbares Sicherheitsrisiko darstellen, daher zum Berührungsschutz bzw. zur Herstellung der elektromagnetischen Verträglichkeit (EMV) aufwendige Überwachungsmaßnahmen mit Hilfe von Fehlerstromsensoren od. dgl. erforderlich machen und nur durch Erdung sicher vermieden können. Potentialschwankungen am Gleichspannungsgenerator können weiter bei bestimmten Solarmodulen wie z. B. Dünnschichtmodulen od. dgl. zu dauerhaften Zerstörungen führen,

Eine Erdung der beschriebenen Art ist ohne weiteres dann möglich, wenn Gleichspannungswandler mit Transformatoren verwendet werden, die eine galvanische Trennung der Gleichspannungsseite von der Wechselspannungsseite herbeiführen. Transformatoren haben aber unabhängig davon, ob Netztransformatoren oder Hochfrequenztransformatoren verwendet werden, u. a. eine Reduzierung des Wirkungsgrades, zum Teil erhebliche Gewichte und Baugrößen und/oder einen zusätzlichen Regelungsaufwand zur Folge, weshalb grundsätzlich transfomatorlose Spannungswandler bevorzugt werden. Die üblichen Topologien von transformatorlosen Gleichspannungswandlern machen jedoch die gewünschte Erdung entweder unmöglich, da dies zum Kurzschließen von benötigten Schaltern, Kapazitäten od. dgl. führen würde, oder haben einen erhöhten Schaltungsaufwand und andere Nachteile zur Folge.

Es sind daher bereits zahlreiche Versuche unternommen worden, das Auftreten der genannten Nachteile auf anderem Wege zu vermeiden. Insbesondere sind Schaltungen bekannt, die dem Zweck dienen, die unerwünschten Ableitströme zu reduzieren (z. B. DE 10 2004 037 466 A1, DE 102 21 592 A1, DE 10 2004 030 912 B3). In diesen Schaltungen wird z. B. ein Solargenerator in bestimmten Phasen des inneren elektrischen Energietransports vom Netz isoliert betrieben. Bei der periodischen erneuten elektrischen Verbindung des Solargenerators mit dem Netz werden dann dessen parasitäre Kapazitäten nur geringfügig umgeladen, so dass sich das Potential des Solargenerators mit Netzfrequenz sinusförmig und bei einer Spannungsamplitude, die der halben Netzspannung entspricht, ändert. Hochfrequenzströme bilden sich darin durch die geringen Spannungsuntersohiede des Solargenerators nur zwischen zwei Schalttakten sowie durch Unsymmetrien beim Schalten aus. Kapazitive Ableitströme lassen sich auf diese Weise daher zwar stark minimieren, aber prinzipiell nicht völlig vermeiden.

Weiterhin ist eine Schaltungsanordnung bekannt (DE 102 25 020 A1), die einen geteilten Solargenerator verwendet, dessen Mittelpunkt geerdet ist. Damit haben alle Teile des Solargenerators ein festes Potential, und kapazitive Ableitströme können prinzipiell nicht fließen. Da die beiden Gleichstromquellen unterschiedliche Ergiebigkeiten haben, ist außerdem eine Schaltung zur Kompensation der Leistungsdifferenzen und Spannungen vorgesehen. Nachteilig sind in diesem Schaltungsvorschlag die hohen Spannungsdifferenzen im Solargenerator und an den Schaltern, die zusätzlichen Verluste in der Kompensationsschaltung und der Umstand, dass mindestens vier hochfrequent getaktete Schalter benötigt werden.

Daneben sind auch bereits Schaltungsanordnungen bekannt, mit denen ein Solargenerator trotz Fehlens eines Transformators einseitig geerdet werden kann. Dadurch werden kapazitive Ableitströme prinzipbedingt verhindert. Eine dieser Schaltungsanordnungen (DE 196 42 522 C1) benötigt allerdings fünf aktive Schalter, wobei ein bzw. zwei Schalter gleichzeitig hochfrequent schalten und den mittleren Ausgangsstrom bereitstellen müssen. Bei dieser auch als "Flying Inductor" bezeichneten Schaltung wird daher der Wirkungsgrad durch die hohe Zahl der gleichzeitig in Serie am Stromfluss beteiligten Bauelemente beeinträchtigt. Nachteilig ist bei dieser Schaltung auch, dass lückende Strompulse in das Netz eingeprägt werden, die ein kapazitives Netzfilter erforderlich machen, das prinzipbedingt durch seinen eigenen Blindleistungsbedarf den Leistungsfaktor, aber auch den Wirkungsgrad der Schaltung im Teillastbereich verschlechtert. Ein derartiges kapazitives Netzfilter kann zwar mit einer anderen bekannten Schaltung vermieden werden (DE 197 32 218 C1), doch werden dazu neun aktive Schalter benötigt, von denen mindestens zwei gleichzeitig mit hohen Frequenzen geschaltet werden müssen, so dass der konstruktive Aufwand noch weiter erhöht und sowohl die Robustheit als auch der Wirkungsgrad der Gesamtvorrichtung negativ beeinflusst würde. Die Topologie eines Flying Inductor hat außerdem den Nachteil, dass die Spannungsbelastung der Schalter von der Netzspannung abhängt und sensibel gegenüber Netzstörungen ist.

Schließlich sind Vorrichtungen bekannt (US 2007/0047277 A1), die zweistufig ausgebildet sind und außer dem eigentlichen Wechselrichter (DC/AC-Wandler) einen Gleichspannungs- bzw. DC/DC-Wandler aufweisen. Die Wechselrichter sind mit einem bipolaren Spannungszwischenkreis versehen, der zwei in Serie liegende Kondensatoren enthält, die an einem dem Null- bzw. Neutralleiter des jeweiligen Netzes zugeordneten und mit diesem verbundenen Erdanschluss miteinander verbunden sind. Der Erdanschluss des Wechselrichters kann in diesem Fall außerdem mit dem negativen Ausgang des Gleichspannungsgenerators verbunden werden. Dies wird durch Anwendung einer Speicherdrossel ermöglicht, die aus zwei magnetisch gekoppelten Wicklungen zusammengesetzt ist. Die beiden Wicklungen dieser Speicherdrossel sind an einem Ende derart galvanisch miteinander verbunden, dass einerseits bei geschlossenem Schalter eine der beiden Wicklungen vom Gleichspannungsgenerator und die andere Wicklung aufgrund der magnetischen Kopplung über die erste Wicklung aufgeladen wird und dass andererseits bei offenem Schalter beide Wicklungen über je einen zugeordneten der beiden Kondensatoren und eine zugehörige Diode entladen werden.

Dem Vorteil, dass diese Vorrichtung mit vergleichsweise einfachen Mitteln, insbesondere ohne Transformator, eine Erdung des Gleichspannungsgenerators ermöglicht, steht der Nachteil gegenüber, dass sie mindestens drei aktive, hochfrequent getaktete Schalter benötigt und zweistufig ausgebildet ist, was den Steuerungs- und Regelungsaufwand erhöht. Außerdem müssen insgesamt wenigstens jeweils zwei Schalter gleichzeitig hochfrequent geschaltet werden, wodurch unvermeidbare Verluste entstehen und der Wirkungsgrad beeinträchtigt wird.

Ausgehend von diesem Stand der Technik besteht das technische Problem der Erfindung darin, den Wechselrichter der eingangs bezeichneten Gattung so auszubilden, dass eine Erdung des negativen Anschlusses des Gleichspannungsgenerators nicht nur ebenfalls mit vergleichsweise einfachen konstruktiven Mitteln, sondern auch mit einer geringeren Anzahl von hochfrequent arbeitenden und gleichzeitig aktiven Schaltern realisiert werden kann.

Zur Lösung dieser Aufgabe dienen die kennzeichnenden Merkmale des Anspruchs 1.

Die Erfindung schlägt einen Wechselrichter in einstufiger Bauweise, d. h. einen Wechselrichter vor, in dem das DC/DC-Teil und das DC/AC-Teil zu einer kombinierten Schaltungsanordnung zusammengefasst sind. Dadurch wird eine gemeinsame Steuerung bzw. Regelung in einer einzigen Stufe ermöglicht. Außerdem wird ein Wechselrichter geschaffen, bei dem immer nur ein einziger hochfrequenter Schalter gleichzeitig aktiv ist. Schließlich kann der negative Pol des Gleichspannungsgenerators geerdet werden und die Energieeinspeisung in das Netz mit einem nicht lückenden Strom erfolgen.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:

Figur 1    das Schaltbild eines erfindungsgemäßen Wechselrichters;

Figur 2    den Betrieb des Wechselrichters nach Fig. 1 bei positiver Netzspannung und positivem Ausgangsstrom;

Figur 3    den Betrieb des Wechselrichters nach Fig. 1 bei negativer Netzspannung und negativem Ausgangsstrom; und

Figur 4    die zur Steuerung der Schalter des Wechselrichters nach Fig. 1 bis 3 verwendeten Signale.

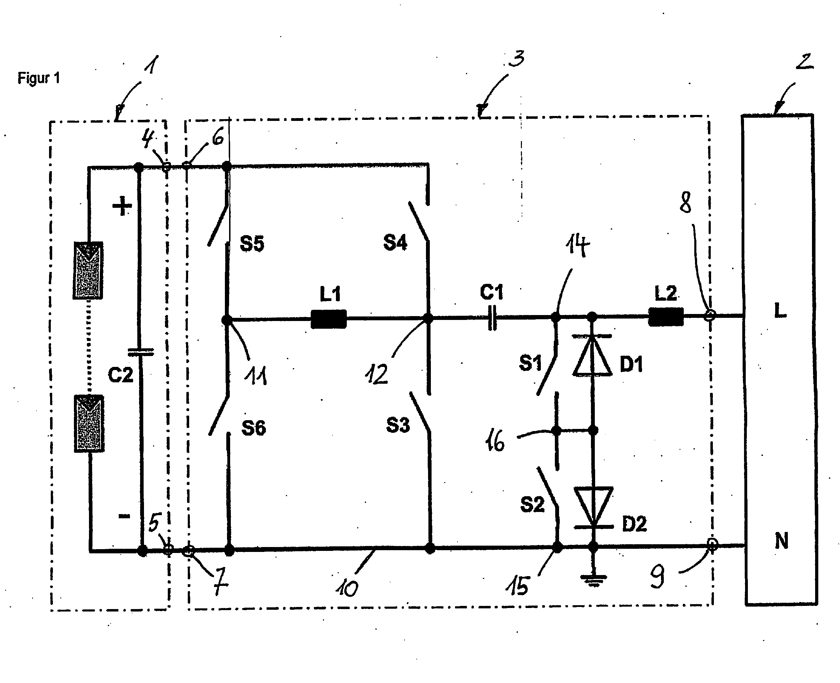

Nach Figur 1 enthält eine im Rahmen der vorliegenden Erfindung betrachtete Vorrichtung einen Gleichspannungsgenerator 1, ein Energieversorgungs-Netz 2 und einen zwischen den Gleichspannungsgenerator 1 und das Netz 2 geschalteten Wechselrichter 3. Der Gleichspannungsgenerator 1 besteht z. B. aus einer Photovoltaik- oder Brennstoffzellenanlage und weist einen seinen beiden Ausgängen 4 (+) und 5 (-) parallel geschalteten Kondensator C2 auf (z. B. US 2007/0047277 A1).

Der Wechselrichter 3 enthält zwei an die Ausgänge 4, 5 des Gleichspannungsgenerators 1 anzuschließende Eingänge 6, 7 und zwei Ausgänge 8 und 9, die zum Anschluss an das Netz 2 und zur einphasigen Einspeisung elektrischer Energie in das Netz 2 dienen. Wenigstens einem der Ausgänge 8, 9 ist eine Glättungs- bzw. Netzdrossel L2 vorgeschaltet, was im Ausführungsbeispiel für den Ausgang 8 zutrifft, der an die Phase L des Netzes 2 angeschlossen ist. Außerdem zeigt Fig. 1, dass eine Leitung 10, die den Ausgang 9 mit dem an den negativen Ausgang 5 des Gleichspannungsgenerators 1 anzuschließenden Eingang 7 verbindet, an das Erdpotential angeschlossen ist.

Im Gegensatz zu den meisten bekannten Schaltungsanordnungen ist zwischen dem Gleichspannungsgenerator 1 und dem Netz 2 keine zweistufige, einen Gleichspannungs-(DC/DC-)Wandler und einen davon getrennten, nachfolgenden Wechselrichter (DC/AC-Wandler) enthaltende Anordnung vorgesehen. Vielmehr wird erfindungsgemäß ein Wechselrichter 3 vorgeschlagen, der gemäß Fig. 1 einerseits Hochsetz- und Tiefsetz-Eigenschaften hat, andererseits die DC/AC-Umwandlung vornimmt und dadurch beide sonst getrennten Funktionen in sich vereinigt. Zu diesem Zweck sind den beiden Eingängen 6, 7 entsprechend Figur ein erster, aus zwei Schaltern S3 und S4 bestehender Serienkreis und ein zweiter, ebenfalls aus zwei Schaltern S5 und S6 bestehender Serienkreis parallel geschaltet. Ein Verbindungspunkt 11 der Schalter S5 und S6 ist mit einem Verbindungspunkt 12 der beiden Schalter S3, S4 durch eine Speicherdrossel L1 verbunden, Die Schalter S3 bis S6 und die Speicherdrossel L1 bilden eine Brückenschaltung mit zwei weiter unten näher erläuterten Strompfaden S6, L1, S4 sowie S5, L1 und S3, von denen einer zur Bereitstellung eines positiven Ausgangsstroms und der andere zur Bereitstellung eines negativen Ausgangsstroms dient.

Zur Auswahl, weicher der beiden Stromkreise aktiv ist, dient eine Umschalteinheit. Diese enthält einerseits die beiden Schalter S5 und S6, andererseits eine aus zwei Schaltern S1, 52 gebildete Sorienschaltung. Im Ausführungsbeispiel ist ein Anschluss des Schalters S1 an einem Verbindungspunkt 14 an einen Anschluss eines als Energiespeicher wirksamen Koppelkondensators C1 angeschlossen, dessen anderer Anschluss mit dem Verbindungspunkt 12 verbunden ist Außerdem ist ein Anschluss des Schalters S2 an einem Verbindungspunkt 15 mit der Leitung 10 verbunden. Der Anschluss 14 ist ferner über die Netzdrossel L2 mit dem Ausgang 8 des Wechselrichters 3 verbunden. Schließlich weist die Umschalteinheit zwei Freilaufdioden D1 und D2 auf. Die Freilaufdiode D1 ist dem Schalter S1 parallel geschaltet. Ihre Kathode ist mit dem Anschluss 14, ihre Anode mit einem Verbindungspunkt 16 zwischen den beiden Schaltern S1, S2 verbunden. Die Freilaufdiode D2 ist dem Schalter S2 parallel geschaltet, wobei ihre Anode mit dem Verbindungspunkt 16 und ihre Kathode mit dem Verbindungspunkt 15 verbunden ist.

Die Umschalteinheit wird erfindungsgemäß mit der Frequenz des zu speisenden Netzes 2, d. h. z. B. mit 50 Hz oder 60 Hz betrieben. Dieser Betrieb erfolgt insbesondere derart, dass während der positiven Halbwellen der Netzspannung die Schalter S2 und S6 im geschlossenen, die Schalter S1, S3 und S5 dagegen im geöffneten Zustand sind, so dass an den Ausgängen 8, 9 ein positiver Ausgangsstrom erzeugt wird. Dagegen sind während der negativen Halbwellen der Netzspannung die Schalter S1 und S5 im geschlossenen und die Schalter S2, S4 und S6 im geöffneten Zustand.

Während die Schalter S1, S2, S5 und S6 der Umschalteinheit pro Periode der Netzspannung nur einmal umgeschaltet werden, dienen die verbleibenden Schalter S3 und S4 der Modulation der während der positiven bzw. negativen Halbwellen einzuspeisenden Sinusströme, indem sie z. B. durch eine übliche PWM-Steuerung mit einer Frequenz von z. B. 16 kHz, d. h. hochfrequent geschaltet werden.

Der beschriebene Wechselrichter 3 arbeitet im Wesentlichen wie folgt:

Anders als bei der Anwendung üblicher Hoch- oder Tiefsetz-Steller erfolgt der Energietransport beim Wechselrichter 3 im wesentlichen kapazitiv durch den Koppelkondensator C1. Die Spannung am Koppelkondensator C1 kann, über kurze Zeiträume betrachtet, als konstant angenommen werden.

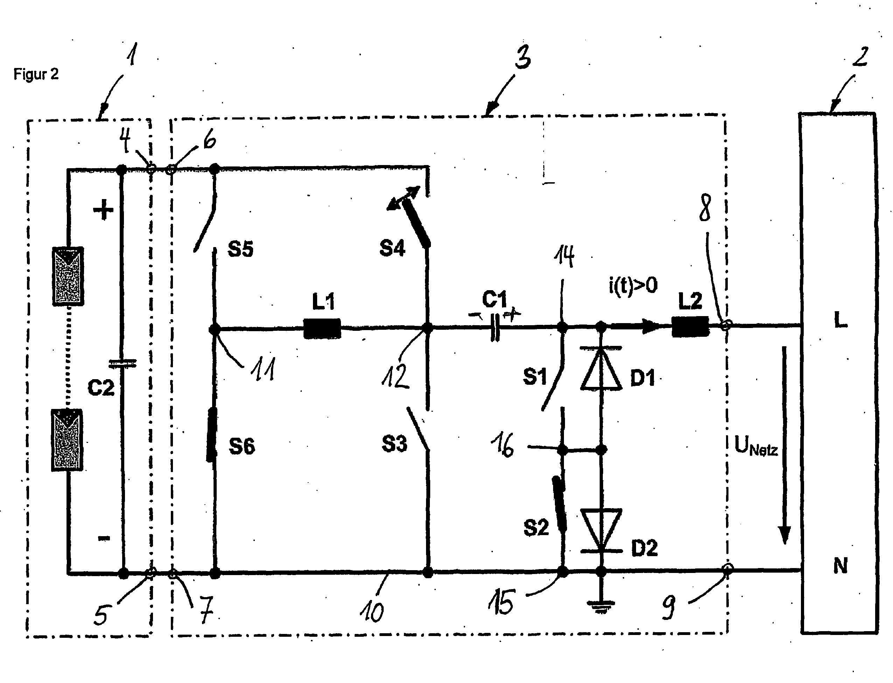

Nachfolgend wird zunächst die Betriebsweise beschrieben, die sich bei positiver Netzspannung und positivem Ausgangsstrom ergibt. Die Schalter S1 bis S6 haben hier die aus Figur 2 ersichtlichen Stellungen, wonach die Schalter S1, S3 und S5 geöffnet sind, die Schalter S2 und S6 ihren geschlossenen Zustand einnehmen und der Schalter S4 hochfrequent geschaltet wird. Dadurch ist im Mittel die Spannung UC1 am Koppelkondensator C1 gleich der Netzspannung UN, d. h. es gilt UC1 = UN.

Befindet sich der Schalter S4 im geschlossenen Zustand, dann ist ein aus den Schaltern S4 und S6 sowie der Speicherdrossel L1 gebildeter Strompfad der Brückenschaltung aktiv, wodurch die Speicherdrossel L1 vom Gleichspannungsgenerator 1 bzw. dessen Kondensator C2 geladen wird. Dabei ist angenommen, dass sich der Koppelkondensator C1 im geladenen Zustand befindet, wobei der Verbindungspunkt 12 (linke Seite des Koppelkondensators C1 in Figur 2) auf negativem Potential, der Verbindungspunkt 14 (rechte Seite des Koppelkondensators C1 in Figur 2) dagegen auf positivem Potential liegt. An der Freilaufdiode D1 liegt daher eine Spannung UD1 = UC2 + UC1 in Sperrrichtung, wobei UC2 im Wesentlichen gleich der Ausgangsspannung des Gleichspannungsgenerators 1 ist. Die Freilaufdiode D2 ist durch S1 kurzgeschlossen. Als Folge davon wird der Koppelkondensator C1 entladen, indem ein positiver Strom i(t) > 0 vom Verbindungspunkt 14 aus durch die Netzinduktivität L2, den Ausgang 8, das Netz 2, den Ausgang 9, die Leitung 10, den Gleichspannungsgenerator 1, den Schalter S4 und den Verbindungspunkt 12 zurück zum Koppelkondensator C1 fließt. Der Strom i(t) durch L2 steigt dabei an, d. h. L2 wird geladen.

Ist der Schalter S4 dagegen im geöffneten Zustand, dann fließen die Ströme durch L1 und L2 in dieselben Richtungen weiter. Dadurch werden L1, L2 wieder entladen, was wegen des geöffneten Schalters S4 nur über die Freilaufdiode D1 möglich ist. Die Spannungen an den Induktivitäten L1 und L2 werden sich daher so anpassen, dass die Freilaufdiode D1 in den leitenden Zustand gelangt. Daher fließt der Strom von L1 über S6, 10, 15, S2, 16, D1, 14 und C1 zurück zum Verbindungspunkt 12, wodurch der Koppelkondensator C1 geladen wird. Dagegen fließt der Strom aus L2 über den Ausgang 8, das Netz 2, den Ausgang 9, den Verbindungspunkt 15, den Schalter S2, den Verbindungspunkt 16 und die Freilaufdiode D1 zurück zum Verbindungspunkt 14. Die Ströme durch L1 und L2 nehmen dadurch allmählich ab.

Wird das Tastverhältnis zwischen der Einschaltdauer und einer Taktperiode für den Schalter S4 mit D bezeichnet, dann kann aus dem Gleichgewicht der Spannung/Zeit-Flächen an den Induktivitäten L1 und L2 sowohl das Spannungsals auch das Strom-Übersetzungsverhältnis berechnet werden. Danach ist

$$UN/UC2 = D/(1 - D)$$

und

$$iL2/iL1 = (D - 1)/D,$$

wobei angenommen ist, dass es keine Verluste gibt. Diese Gleichungen zeigen, dass der Wechselrichter 3 bei D < 0,5 mit Tiefsetz- und bei D > 0,5 mit Hochsetzfunktion arbeitet.

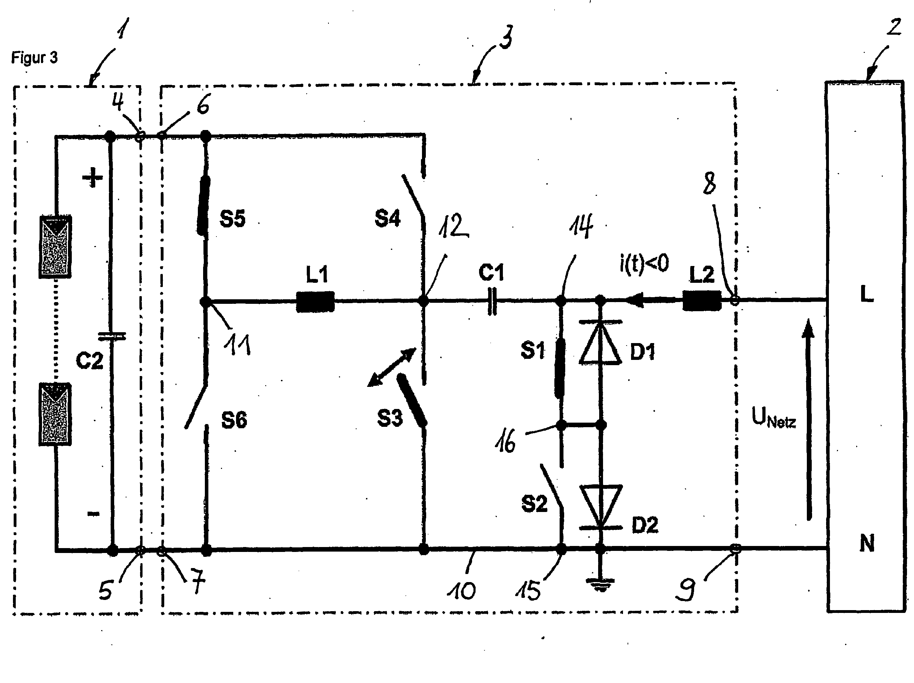

Bei negativer Netzspannung und negativem Ausgangsstrom ist die Betriebsweise des Wechselrichters 3 dadurch festgelegt, dass die Schalter S1 bis S6 jetzt die aus Figur 3 ersichtlichen Stellungen einnehmen, wonach S2, S4 und S6 geöffnet sind, die Schalter S1 und S5 ihren geschlossenen Zustand einnehmen und der Schalter S3 hochfrequent geschaltet wird. Hier gilt, dass die Spannung UC1 an C1 im Mittel gleich der Summe aus der Ausgangsspannung UC2 des Gleichspannungsgenerators 1 und der Netzspannung UN ist, d. h. im quasi stationären Zustand ist UC1 = UC2 + UN.

Befindet sich der Schalter S3 im geschlossenen Zustand, dann ist ein aus den Schaltern S3 und S5 sowie der Speicherdrossel L1 gebildeter Strompfad der Brückenschaltung aktiv, wodurch die Speicherdrossel L1 vom Gleichspannungsgenerator 1 geladen wird, allerdings in einer im Vergleich zur positiven Halbwelle umgekehrten Richtung. Der Koppelkondensator C1 befinde sich wiederum bereits im geladenen Zustand, wobei der Verbindungspunkt 12 (linke Seite von C1 in Figur 3) auf positivem Potential und der Verbindungspunkt 14 (rechte Seite von C1 in Figur 3) auf negativem Potential liegt. An der Freilaufdiode D2 liegt daher die Spannung UC1 in Sperrrichtung, während die Freilaufdiode D1 durch S1 kurzgeschlossen ist. Als Folge davon wird der Koppelkondensator C1 entladen, indem ein Strom i(t) < 0 durch das Netz 2 fließt, d. h. es fließt ein Strom vom Verbindungspunkt 12 aus den durch Schalter S3, die Leitung 10, den Verbindungspunkt 15, den Ausgang 9, das Netz 2, den Ausgang 8, die Netzdrossel L2 und den Verbindungspunkt 14 zurück zum Koppelkondensator C1. Der Strom durch L2 steigt dabei an, d. h. L2 wird geladen.

Ist der Schalter S3 dagegen im geöffneten Zustand, dann fließen die Ströme durch L1 und L2 in denselben Richtungen weiter. Dadurch werden L1 und L2 wieder entladen, was wegen des geöffneten Schalters S3 nur über eine entsprechende Spannungsanpassung an L1 und L2 und einen dadurch erzwungenen Stromfluß über die Freilaufdiode D2 möglich ist. Daher fließt der Strom aus L1 jetzt vom Verbindungspunkt 12 aus über C1, 14, S1, 16, D2, 15, 10,1 1 (bzw. C2) und S5 zurück zu L1, wodurch der Koppelkondensator C1 geladen wird. Dagegen fließt der Strom aus L2 vom Verbindungspunkt 14 aus über S1, 16, D2, 15, 10, den Ausgang 9, das Netz 2 und den Ausgang 8 zurück zu L2. Die Ströme durch L1, L2 nehmen dadurch allmählich ab.

Wird das Tastverhältnis zwischen der Einschaltdauer und einer Tastperiode für den Schalter S3 mit D bezeichnet, dann kann analog zur obigen, für die positive Halbwelle geltenden Betrachtung festgestellt werden, dass

$$UN/UC2 = D/(1 - D)$$

und

$$iL2/iL1 = (D - 1)/D,$$

wobei wiederum angenommen ist, dass keine Verluste auftreten. Wie bei der positiven Halbwelle ist daher sowohl ein Hochsetz- als auch ein Tiefsetzbetrieb möglich.

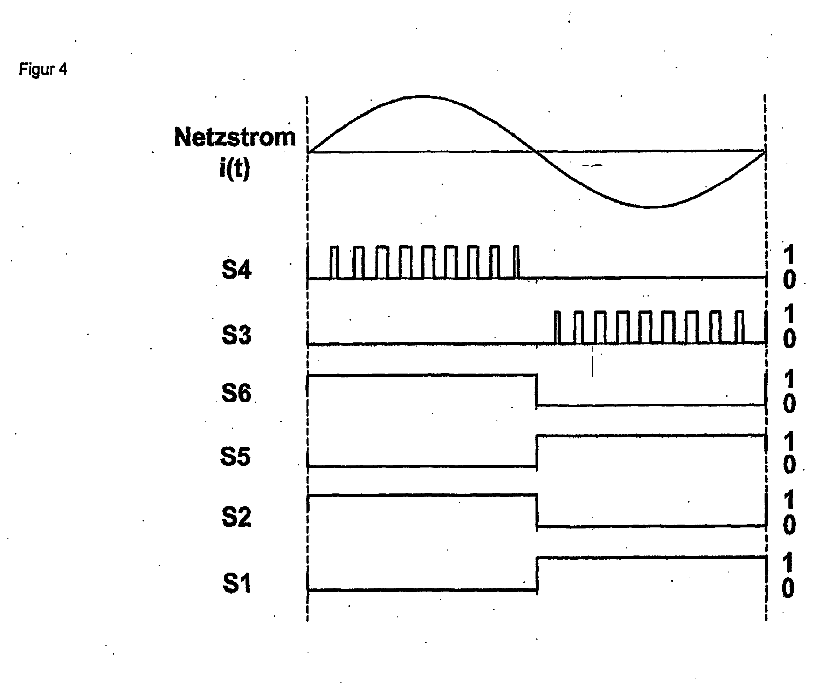

Da aufgrund der Anwendung der Netzinduktivität L2 sowohl die Ausgangsspannung als auch der Ausgangsstrom sinusförmig ist, wird das Tastverhältnis D für jede Halbwelle in an sich bekannter Weise sinusförmig moduliert bzw. geregelt. Dies ist in Figur 4 schematisch dargestellt, worin die Werte "0" und "1" jeweils die aus- und eingeschalteten Zustände der Schalter S1 bis S6 angeben. Analog zur Kurvenform von i(t) ist auch die nicht dargestellte Netzspannung als ideal sinusförmig anzunehmen. Die Schalter S3 und S4 werden durch breiter und schmaler werdende Impulse gesteuert, wie dies bei PWM-Steuerungen üblich ist. Die Taktung der Schalter S3, S4 erfolgt abwechselnd für die beiden Halbwellen mit dem Tastverhältnis D(t), wobei

$$D(t) = M/(M + 1)$$

und wobei

$$M = UN/UC2 = D/(1 - D)$$

das Verhältnis zwischen der Ausgangsspannung an den Ausgängen 8, 9 und der Eingangsspannung an den Eingängen 6, 7 des Wechselrichters 3 beschreibt. Die Schalter S2, S6 werden komplementär zu den Schaltern S1, S5 geschaltet.

Die beschriebene Schaltungsanordnung für den Wechselrichter 3 kann auf zwei einfache Grundformen zurückgeführt werden. Während der positiven Halbwelle (positiver Ausgangsstrom) arbeitet der Wechselrichter 3 nach Art eines sogenannten Zeta-Wandlers, der die Bauelemente S4, L1, C1, D1 und L2 aufweist und die Polarität der Eingangsspannung unverändert lässt (Fig. 2). Dagegen arbeitet der Wechselrichter 3 während der negativen Halbwellen (negativer Ausgangsstrom) als sogenannter Cuk-Wandler, der die Bauelemente S3, L1, C1, D2 und L2 aufweist und die Polarität der Eingangsspannung invertiert (Figur 3). Hierzu werden die Schalter S1 bis S6 als ideal angenommen, d. h. Durchlasswiderstände od. dgl. treten nicht auf. Beide Wandlerarten Zeta und Cuk haben außerdem die gemeinsame Eigenschaft, dass der Energietransfer hauptsächlich kapazitiv erfolgt.

Ein besonderer Vorteil ergibt sich daraus, dass der erfindungsgemäße Wechselrichter 3 in einer und derselben Schaltungsanordnung einen Zeta-Wandler und einen Cuk-Wandler sowie eine aus den Schaltern S1, S2, S5 und S6 gebildete Umschalteinheit in sich vereinigt. Diese Umschalteinheit schaltet mit Netzfrequenz abwechselnd auf die Zeta- bzw. Cukfunktion um und legt einerseits mittels der Schalter S5 und S6 die Stromrichtung durch L1 und andererseits mittels der Schalter S1 und S2 die Funktion der Freilaufdioden D1 und D2 fest. Vorteilhaft ist ferner, dass während der positiven und negativen Halbwellen immer nur ein einziger Schalter S3 bzw. S4 hochfrequent betätigt werden muss, so dass die Verluste klein gehalten werden und ein hoher Wirkungsgrad erzielt wird. Schließlich ist vorteilhaft, dass sich eine einstufige Anordnung ergibt, die einen vereinfachten Steuer- und Regelungsaufwand zur Folge hat. Die Umschalteinheit kann in diesem Zusammenhang nicht als zweite Stufe betrachtet werden, da sie lediglich eine Schaltfunktion hat und nicht der Modulation der positiven und negativen Ausgangsströme dient. Die Schalter S1, S2, S5 und S6 werden in der Praxis zeitsynchron mit den Nulldurchgängen der Netzströme geschaltet, wozu keine aufwendige Steuer- und Regeleinrichtung, sondern lediglich eine die Nulldurchgänge messende Einrichtung benötigt wird. Abgesehen davon kann die aus den Schaltern S3 bis S6 und der Speicherdrossel L1 gebildete Brückenschaltung als eine speziell betriebene H-Brücke bezeichnet werden, wobei die Speicherdrossel L1 im Brückenzweig liegt und entweder mit den Schaltern S4 und S6 oder mit den schaltern S3 und S5 Seitenzweige der Brücke bzw. Strompfade bildet, in denen die Speicherdrossel L1 in entgegengesetzten Richtungen vom Strom durchflossen wird. Daher kann der Wechselrichter 3 insgesamt als eine Schaltungsanordnung betrachtet werden, die eine H-Brücke, eine Umschalteinheit und einen Energiespeicher in Form eines Koppelkondensators C1 enthält. Diese Schaltungsanordnung ermöglicht es zugleich, den negativen Ausgang 5 des Gleichspannungsgenerators 1 bzw. den zum Anschluss an diesen Ausgang 5 bestimmten Eingang 7 des Wechselrichters 3 zu erden und einen nicht lückenden Stromfluss zum Netz 2 zu bewirken. Im Übrigen ist klar, dass außer einer positiven oder einer negativen Spannung bei Bedarf auch eine verschwindend kleine Ausgangsspannung an den Ausgängen 8 und 9 des Wechselrichters 3 zur Verfügung gestellt werden kann, d. h. die Ausgangsspannung kann Null, größer als Null oder kleiner Null sein.

Die Erfindung ist nicht auf das beschriebene Ausführungsbeispiel beschränkt, das auf vielfache Weise abgewandelt werden kann. Insbesondere wurden in der obigen Beschreibung nur die zum Verständnis der Erfindung notwendigen Bauelemente beschrieben, d. h. erforderliche und an sich bekannte Steuer- und Regeleinrichtungen, MPP-Regelungen od. dgl. sind in Abhängigkeit vom Bedarf zusätzlich vorhanden. Außerdem versteht sich, dass die verschiedenen Merkmale auch in anderen als den beschriebenen und dargestellten Kombinationen angewendet werden können.

## Patentansprüche

1. Wechselrichter zur Einspeisung elektrischer Energie in ein Energieversorgungsnetz (2) mit je einem zum Anschluss an den negativen bzw, positiven Ausgang (4, 5) eines Gleichspannungsgenerators (1) bestimmten Eingang (6, 7), wobei der zum Anschluss an den negativen Ausgang (5) bestimmte Eingang (7) erdbar ist, zwei zum Anschluss an das Netz (2) bestimmten Ausgängen (8, 9), wobei wenigstens ein Ausgang (8) mit einer Netzdrossel (L2) versehen ist, und mit einer eine Speicherdrossel (L1) und Schalter (S1 bis S6) aufweisenden Einrichtung zur Umwandlung einer Gleichspannung an den Eingängen (6,7) in eine Wechselspannung an den Ausgängen (8, 9), wobei die Einrichtung eine Brückenschaltung mit zwei Strompfaden (S4, L1, S6 bzw. S5, L1, S3), von denen der eine zur Bereitstellung positiver und der andere zur Bereitstellung negativer Ausgangsströme eingerichtet ist, eine Umschalteinheit zur mit Netzfrequenz erfolgenden Umschaltung zwischen den beiden Strompfaden (S4, L1, S6; S5, L1, S3) und einen die Brückenschaltung mit der Umschalteinheit verbindenden Koppelkondensator (C1) enthält,

   **dadurch gekennzeichnet,**

   **dass** die Brückenschaltung als H-Brücke ausgebildet ist, wobei die beiden Strompfade (S4, L1, S6; S5, L1, S3) je zwei Schalter (S4, S6; S5, S3) aufweisen und die Speicherdrossel (L1) beiden Strompfaden gemeinsam ist, wobei ein erster, aus zwei Schaltern (S3 und S4) bestehender Serienkreis und ein zweiter, ebenfalls aus zwei Schaltern (S5 und S6) bestehender Serienkreis parallel geschaltet ist, sowie ein Verbindungspunkt (11) der beiden Schalter (S6 und S6) des zweiten Serienkreises mit einem Verbindungspunkt (12) der beiden Schalter (53, S4) des ersten Serienkreises durch die Speicherdrossel (L1) verbunden ist, und dass die Schalter (S3 bis S6) des ersten und zweiten Serienkreises und die Speicherdrossel (L1) die Brückenschaltung mit den Strompfaden (S6, L1, S4 sowie S5, L1 und S3) bilden:

**2.** Wechselrichter nach Anspruch 1, **dadurch gekennzeichnet, dass** die Umschalteinheit zwei in Serie zwischen den Ausgängen liegende weitere Schalter (S1, S2) und diesen parallel geschaltete Freilaufdioden (D1, D2) aufweist.

**3.** Wechselrichter nach Anspruch 2, **dadurch gekennzeichnet, dass** eine Seite des Koppelkondensators (C1) mit einem Anschluss der Speicherdrossel (L1) und die andere Seite des Koppelkondensators (C1) mit einem der Ausgänge (8) verbunden ist

**4.** Wechselrichter nach Anspruch 2 oder 3, **dadurch gekennzeichnet, dass** einer der beiden weiteren Schalter (S2) der Umschalteinheit nur während positiver Halbwellen und der andere der beiden weiteren Schalter (S1) der Umschalteinheit nur während der negativen Halbwellen der Netzspannung im geschlossenen Zustand ist.

**5.** Wechselrichter nach einem der Ansprüche 1 bis 4, **dadurch gekennzeichnet, dass** ein Schalter (S4, S3) jedes der beiden Strompfade (S4, L1, S6; S5, L1, S3) der Brückenschaltung ein hochfrequent betätigter Schalter ist.

## Claims

**1.** Inverter for feeding electrical energy into a power grid (2), with a respective input (6, 7) intended for connection to the negative and positive output (4, 5), respectively, of a direct voltage generator (1), wherein the input (7) intended for connection to the negative output (5) can be earthed, and with two outputs (8, 9) intended for connection to the grid (2), wherein at least one output (8) is provided with a power choke (L2), and with a device, comprising a storage choke (L1) and switches (S1 to S6), for converting a direct voltage at the inputs (6, 7) into an alternating voltage at the outputs (8, 9), wherein the device includes a bridge circuit with two current paths (S4, L1, S6 or S5, L1, S3), one of which is set up to provide a positive output current and the other is set up to provide a negative output current, and with a switching unit for switching between the two current paths (S4, L1, S6; S5, L1, S3) at mains frequency, and with a coupling capacitor (C1) connecting the bridge circuit to the switching unit, **characterised in that** the bridge circuit is designed as an H bridge, wherein the two current paths (S4, L1, S6; S5, L1, S3) each comprise two switches (S4, S6; S5, S3) and the storage choke (L1) is shared by the two current paths, wherein a first series circuit consisting of two switches (S3 and S4) and a second series circuit also consisting of two switches (S5 and S6) are connected in parallel, and a connecting point (11) of the two switches (S5 and S6) of the second series circuit is connected to a connecting point (12) of the two switches (S3, S4) of the first series circuit by the storage choke (L1), and that the switches (S3 to S6) of the first and second series circuits and the storage choke (L1) form the bridge circuit with the current paths (S6, L1, S4 as well as S5, L1 and S3).

**2.** Converter according to claim 1, **characterised in that** the switching unit comprises two further switches (S1, S2) arranged in series between the outputs and free-wheeling diodes (D1, D2) that are connected in parallel to the further switches.

**3.** Converter according to claim 2, **characterised in that** one end of the coupling capacitor (C1) is connected to a terminal of the storage choke (L1) and the other end of the coupling capacitor (C1) is connected to one of the outputs (8).

**4.** Converter according to claim 2 or 3, **characterised in that** one of the two further switches (S2) of the switching unit is in the closed state only during positive half waves of the mains votlage and the other one of the two further switches (S1) of the switching unit is in the closed state only during the negative half waves of the mains voltage.

**5.** Converter according to any one of claims 1 to 4, **characterised in that** one switch (S4, S3) in each of the two current paths (S4, L1, S6; S5, L1, S3) of the bridge circuit is a switch that is actuated at high frequency.

## Revendications

**1.** Onduleur pour l'injection d'énergie électrique dans un réseau de distribution d'énergie (2) comportant des entrées (6, 7) prévues pour être connectées respectivement à la sortie positive et à la sortie négative (4, 5) d'un générateur de courant continu (1), l'entrée (7) prévue pour être connectée à la sortie négative (5) pouvant être mise à la terre, deux sorties (8, 9) prévues pour être connectées au réseau (2), au moins une sortie (8) étant pourvue d'une réactance de réseau (L2), et un dispositif présentant une réactance d'accumulateur (L1) et des interrupteurs (S1 à S6) et servant à convertir une tension continue aux entrées (6, 7) en une tension alternative aux sorties (8, 9), le dispositif comprenant un montage en pont comportant deux trajets de courant (S4, L1, S6 et S5, L1, S3) dont l'un est conçu pour la préparation de courants de sortie positifs et l'autre pour la préparation de courants de sortie négatifs, une unité de commutation destinée à commuter à la fréquence du réseau entre les deux trajets de courant (S4, L1, S6; S5, L1, S3) et un condensateur de couplage (C1) qui connecte le montage en pont à l'unité de commutation,

**caractérisé en ce que**

le montage en pont est réalisé sous la forme d'un pont en H, les deux trajets de courant (S4, L1, S6; S5, L1, S3) comportant deux interrupteurs (S4, S6; S5, S3) et la réactance d'accumulateur (L1) étant commune aux deux trajets de courant, un premier circuit série composé de deux interrupteurs (S3 et S4) et un second circuit série, également composé de deux interrupteurs (S5 et S6), étant connectés en parallèle, et un point de jonction (11) des deux interrupteurs (S5 et S6) du second circuit série étant connecté à un point de jonction (12) des deux interrupteurs (S3, S4) du premier circuit série par la réactance d'accumulateur (L1), et **en ce que** les interrupteurs (S3 à S6) des premier et second circuits série et la réactance d'accumulateur (L1) forment le montage en pont avec les trajets de courant (S4, L1, S6 ainsi que S5, L1 et S3).

**2.** Onduleur selon la revendication 1,
**caractérisé en ce que**
l'unité de commutation comporte deux autres interrupteurs (S1, S2) intercalés entre les sorties et des diodes de roue libre (D1, D2) connectées en parallèle avec ces interrupteurs.

**3.** Onduleur selon la revendication 2,
**caractérisé en ce que**
un côté du condensateur de couplage (C1) est connecté à une connexion de la réactance d'accumulateur (L1) et l'autre côté du condensateur de couplage (C1) est connecté à une des sorties (8).

**4.** Onduleur selon la revendication 2 ou 3,
**caractérisé en ce que**
un des deux autres interrupteurs (S2) de l'unité de commutation est à l'état fermé uniquement pendant les demi-ondes positives de la tension du réseau et l'autre interrupteur (S1) uniquement pendant les demi-ondes négatives de la tension du réseau.

**5.** Onduleur selon l'une des revendications 1 à 4,
**caractérisé en ce que**
un interrupteur (S4, S3) de chacun des deux trajets de courant (S4, L1, S6; S5, L1, S3) du circuit en pont est un interrupteur actionné à haute fréquence.

Figur 1

EP 2 030 299 B1

Figur 2

Figur 3

EP 2 030 299 B1

Figur 4

EP 2 030 299 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037466 A1
- DE 10221592 A1
- DE 102004030912 B3
- DE 10225020 A1
- DE 19642522 C1
- DE 19732218 C1
- US 20070047277 A1